# EUROPÄISCHE PATENTSCHRIFT

(11) **EP 2 876 352 B1**
(45) Veröffentlichungstag und Bekanntmachung des Hinweises auf die Patenterteilung: **20.01.2021**
(21) Anmeldenummer: 14002812.7
(22) Anmeldetag: 12.08.2014
(51) Int. Cl.: F17C 1/16, F17C 1/14

(54) **Nutzfahrzeug mit Druckgasbehälter**
Commercial vehicle with tank for pressurised gas
Véhicule utilitaire équipé d'un récipient pour gaz comprimé

(30) Priorität: 22.10.2013 AT 8142013
(43) Veröffentlichungstag der Anmeldung: 27.05.2015
(73) Patentinhaber: MAN Truck & Bus Österreich AG, 4400 Steyr (AT)
(72) Erfinder: Raab, Gottfried, 4300 Perg (AT); Reitbauer, Rudolf, 3331 Kematen/Ybbs (AT)
(74) Vertreter: v. Bezold & Partner Patentanwälte - PartG mbB

(56) Entgegenhaltungen:
- EP-A1- 0 040 578
- EP-A1- 1 818 596
- EP-A2- 1 300 308
- WO-A1-2004/026716
- WO-A1-2013/030857
- WO-A2-2006/027558
- WO-A2-2013/083652
- DE-A1- 2 405 788
- GB-A- 117 343
- US-A- 3 174 722
- US-A1- 2002 175 089
- US-A1- 2009 304 308

## Beschreibung

Die Erfindung betrifft ein Nutzfahrzeug, vorzugsweise einen Omnibus oder einen Lastkraftwagen, mit einem Druckgassystem, das zumindest einen Druckgasbehälter aufweist.

Nutzfahrzeuge sind üblicherweise mit Druckluftsystemen ausgestattet, die einen oder mehrere Druckluftbehälter zur Aufnahme von Druckluft aufweisen. Die Druckluftbehälter sind üblicherweise aus Stahl gefertigt und weisen somit ein nicht unbeachtliches Gewicht auf. EP 1 818 596 A1 offenbart einen Druckbehälter aus Kunststoff, insbesondere Druckluftbehälter für Bremskraftanlagen und pneumatische Hilfseinrichtungen an Lastkraftwagen, Trucks, Omnibussen, Schienenfahrzeugen oder an Feuerlöschanlagen und ein Verfahren zu seiner Herstellung. Der Druckluftbehälter zeichnet sich insbesondere dadurch aus, dass er mit Polkappen aus einen aus Kugelabschnitten zusammengesetzter oder als Rotationsellipsoid geformter mehrlagiger Körper ausgebildet ist, wobei das Verhältnis aus Polkappenradius und Radius des Mantelmittenbereichs des Druckbehälters ein Verhältnis von mindestens 1:2,5 bis 1:5 erreicht, wobei die Wand der Polkappen und die Wand des Mantelmittelbereichs unter gleicher Krümmung ansatzlos ineinander übergehen. Der Druckluftbehälter wird zu einem Körper aus zusammengesetzten Kugelabschnitten oder als Rotationsellipsoidkörper mit einem Polkappenradius-/Mantelradius-Verhältnis von mindestens 1:2,5 bis 1:5 in den Arbeitschritten Spritzen des Liners, Aufschweißen der Armierungsschichten beim Bewickeln auf den Liner und Umspritzen des armierten Liners geformt wird. Zum Stand der Technik sind ferner die WO 2013/030857 A und die US 2009/304308 A1 zu nennen.

Eine Aufgabe der Erfindung ist es, ein Nutzfahrzeug mit einem Druckgasbehälter zu schaffen, der einerseits leichtgewichtig und andererseits zugleich für den Einsatz in einem Nutzfahrzeug-Druckgassystem geeignet ist.

Diese Aufgabe kann mit den Merkmalen des unabhängigen Anspruchs gelöst werden. Vorteilhafte Weiterbildungen der Erfindung sind in den Unteransprüchen und der nachfolgenden Beschreibung offenbart.

Die Erfindung schafft ein Nutzfahrzeug, vorzugsweise einen Omnibus oder einen Lastkraftwagen, mit einem Druckgassystem, das zumindest einen Druckgasbehälter aufweist, der zur Aufnahme von Druckgas dient und zumindest einen Befüllanschluss zur Druckgas-Zuführung und Entladeanschlüsse zur Druckgas-Entladung umfasst. Der Druckgasbehälter zeichnet sich insbesondere dadurch aus, dass er gänzlich aus Gewebematerial hergestellt ist. Das verwendete Gewebematerial ist zweckmäßig einerseits relativ leichtgewichtig und andererseits relativ kostengünstig. Das Gewebematerial ist zweckmäßig ferner flexibel in der Geometrie.

Das Gewebematerial ist vorzugsweise ein flexibles Gewebematerial und/oder ein Gewebe-Synthetikmaterial.

Erfindungsgemäß ist der Druckgasbehälter gänzlich aus dem Gewebematerial hergestellt. Funktionskomponenten des Druckgasbehälters (z.B. die Befüll- und Entladeanschlüsse, Schnittstellen, Befestigungsmaßnahmen, etc.) können im Rahmen der Erfindung zweckmäßig natürlich aus Metall, Stahl oder anderen geeigneten Materialien ausgeführt sein.

Der Druckgasbehälter kann zweckmäßig materialbedingt ferner als Geräuschschürze und/oder Akustikabschirmmaßnahme dienen.

Zu erwähnen ist, dass im Rahmen der Erfindung insbesondere die zweckmäßig äußere Hüllfläche des Druckgasbehälters aus Gewebematerial hergestellt ist.

Es ist möglich, dass der Druckgasbehälter für einen Druck von bis zumindest 7,5 bar, 10 bar, 12, 5 bar oder bis zumindest 15 bar ausgelegt ist.

Der Druckgasbehälter ist mit zumindest einem Nebenaggregat des Nutzfahrzeugs, vorzugsweise einer Bremsvorrichtung des Nutzfahrzeugs, verbunden, um das zumindest eine Nebenaggregat mit Druckgas zu versorgen.

Es ist möglich, dass der Druckgasbehälter zumindest zwei, zumindest drei, zumindest vier, zumindest fünf oder sogar zumindest sechs Entladeanschlüsse zur Druckgas-Entladung aufweist. Alternativ oder ergänzend kann der Druckgasbehälter mit zumindest zwei, zumindest drei, zumindest vier, zumindest fünf oder sogar zumindest sechs Nebenaggregaten des Nutzfahrzeugs zweckmäßig über die zuvor genannten Entladeanschlüsse verbunden sein, um sie mit Druckgas zu versorgen.

Der Druckgasbehälter kann z. B. mit einem Motorkompressor, der zur Erzeugung des Druckgases dient, verbunden sein. Ebenso kann der Druckgasbehälter mit einem Antriebsmotor verbunden sein, der zur Erzeugung des Druckgases genutzt wird (z. B. Gasentnahme an einem Zylinder). Die Erzeugung des Druckgases ist somit nicht auf einen Motorkompressor beschränkt, sondern kann z.B. auch durch einen Antriebsmotor erfolgen.

Der Druckgasbehälter kann geometrisch schlauch- oder rohrförmig (z. B. im Wesentlichen kreiszylinderförmig) oder kissenförmig (z. B. im Wesentlichen rechteck- oder quadratkissenförmig) ausgebildet sein.

Der zumindest eine Befüllanschluss und/oder der zumindest eine Entladeanschluss können mit einem Gewindering versehen sein, an den ein Adapter für einen Schnellverschluss einer Druckgasleitung anschraubbar ist.

Der Druckgasbehälter dient zweckmäßig dazu, Druckgas zu speichern, und während eines Stillstands den Überdruck in seinem Innern über eine vordefinierte Zeitdauer aufrecht zu erhalten.

Es ist möglich, dass das Volumen der Druckgas-Bevorratung des Druckgasbehälters variabel ist und sich z. B. nach dem durchschnittlichen Gasbedarf der zumindest einen angeschlossenen, mit Druckgas zu versorgenden Nutzfahrzeug-Komponente, insbesondere zumindest einem Nebenaggregat, richtet.

Das Nutzfahrzeug kann zunächst auf übliche Weise einen zwei Längsträger umfassenden Fahrzeugrahmen aufweisen. Zumindest ein Druckgasbehälter kann z. B. zwischen den zwei Längsträgern, unterhalb zumindest einem der zwei Längsträger und/oder oberhalb zumindest einem der zwei Längsträger angeordnet werden.

Ein Druckgasbehälter kann ferner an einer Fahrerkabine des Nutzfahrzeugs, insbesondere deren Rückwand und/oder deren Dachspoiler, angeordnet werden.

Ein Druckgasbehälter kann ebenso an oder in einer Schürze oder an oder in einem Stoßfänger des Nutzfahrzeugs angeordnet werden.

Es ist möglich, dass der Druckgasbehälter über zumindest eine Rohrschellen-Befestigungseinrichtung an das Nutzfahrzeug montiert ist.

Als Gas wird vorzugsweise Luft eingesetzt, so dass das Druckgas zweckmäßig Druckluft ist. Die Erfindung ist allerdings nicht auf das Medium Luft beschränkt, sondern umfasst als Medium auch andere gasförmige Stoffe.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Seitenansicht eines Nutzfahrzeugs gemäß einer Ausführungsform der Erfindung,
- Figur 2: zeigt eine schematische Seitenansicht eines Druckgasbehälters gemäß einer Ausführungsform der Erfindung,
- Figur 3: zeigt eine schematische Perspektivansicht eines Druckgasbehälters gemäß einer anderen Ausführungsform der Erfindung.

Die in den Figuren gezeigten Ausführungsformen der Erfindung stimmen teilweise überein, wobei ähnliche oder identische Teile mit den gleichen Bezugszeichen versehen sind, und zu deren Erläuterung auch auf die Beschreibung der anderen Ausführungsform verwiesen wird, um Wiederholungen zu vermeiden.

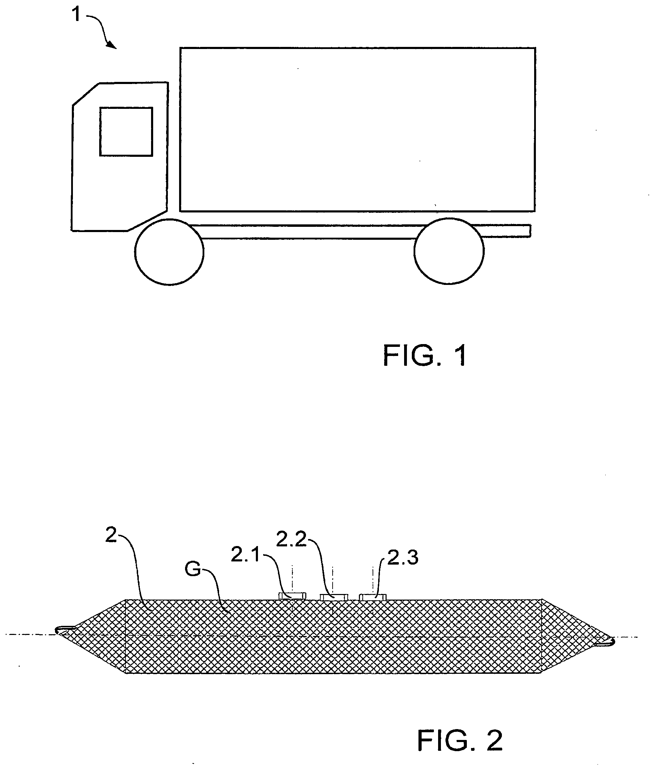

Figur 1 zeigt eine schematische Seitenansicht eines Nutzfahrzeugs 1 gemäß einer Ausführungsform der Erfindung. Das Nutzfahrzeug 1 ist beispielhaft als Transporter-Lastkraftwagen dargestellt. Das Nutzfahrzeug 1 kann im Rahmen der Erfindung aber ebenso z. B. ein Sattelzug, eine Sattelzugmaschine, ein Sattelanhänger und jedweder andere Lastkraftwagen- oder Anhänger-Typ sein und ebenso ein Omnibus. Das Nutzfahrzeug 1 umfasst zunächst auf übliche Weise ein nicht dargestelltes Druckgassystem. Eine Besonderheit des Druckgassystems ist, dass es mit zumindest einem, in Figur 2 gezeigten Druckgasbehälter 2 ausgestattet ist.

Figur 2 zeigt eine schematische Seitenansicht des Druckgasbehälters 2. Der Druckgasbehälter 2 ist im Wesentlichen schlauch- oder rohrförmig ausgebildet, dient zur Aufnahme von Druckgas und weist einen Befüllanschluss 2.1 zur Druckgas-Zuführung und zwei Entladeanschlüsse 2.2 und 2.3 zur Druckgas-Entladung auf. Der Druckgasbehälter 2 per se, einschließlich dessen Hüllfläche, ist nicht aus Metall oder Stahl gefertigt, sondern aus einem schlaffen, flexiblen Gewebe-Synthetikmaterial G ausgebildet. Die Befüll- und Entladeanschlüsse 2.1, 2.2 und 2.3 und ggf. andere Funktionskomponenten des Druckgasbehälters 2 können zweckmäßig natürlich weiterhin aus Metall, Stahl oder anderen geeigneten Materialien hergestellt sein.

Das Gewebematerial G ist für einen Druck von bis zumindest ungefähr 12,5 bar ausgelegt, um den Anforderungen innerhalb des Nutzfahrzeug-Druckgassystems gerecht werden zu können.

Der Befüllanschluss 2.1 zur Druckgas-Zuführung ist mit einem nicht gezeigten Motorkompressor des Nutzfahrzeugs 1 verbunden, der dazu dient, das Gas mit Druck zu beaufschlagen und somit das Druckgas zu erzeugen.

Der Druckgasbehälter 2 ist über die zwei Entladeanschlüsse 2.2 und 2.3 zur Druckgas-Entladung mit zwei nicht gezeigten Nebenaggregaten des Nutzfahrzeugs 1 verbunden (z. B. einem Bremssystem des Nutzfahrzeugs 1, einer Hilfslenkeinrichtung des Nutzfahrzeugs 1, einer Servolenkung des Nutzfahrzeugs 1, einem Bremskraftverstärker des Nutzfahrzeugs 1, einer Klimaanlage des Nutzfahrzeugs 1, etc.), um sie mit Druckgas zu versorgen.

Der Befüllanschluss 2.1 ist mit einem Gewindering versehen, an den ein Adapter für einen Schnellverschluss einer Druckgas-Zuführleitung anschraubbar ist. Die Entladeanschlüsse 2.2 und 2.3 sind ebenso mit Gewinderingen versehen, an die Adapter für einen Schnellverschluss einer Druckgas-Abführleitung anschraubbar sind.

Der Druckgasbehälter 2 ist so ausgeführt, dass er Druckgas speichert und während eines Stillstands des Nutzfahrzeugs 1 den Überdruck in seinem Innern über eine vordefinierte Zeitdauer aufrecht erhalten kann.

Das Volumen der Druckgas-Bevorratung des Druckgasbehälters 2 ist zweckmäßig variabel ausgeführt und kann sich z. B. nach dem durchschnittlichen Gasbedarf der angeschlossenen Nutzfahrzeug-Nebenaggregate richten.

Der in Figur 2 gezeigte Druckgasbehälter 2 ist insgesamt aus Gewebematerial G gefertigt und kann zweckmäßig materialbedingt als Geräuschschürze wirken.

Das in Figur 1 gezeigte Nutzfahrzeug 1 umfasst einen herkömmlichen Fahrzeugrahmen, der zwei Längsträger aufweist. Geeignete Montageposition eines oder mehrerer Druckgasbehälter 2 sind z.B.: Der Bauraum zwischen den zwei Längsträgern, z. B. seitlich neben einer Antriebsachse des Nutzfahrzeugs 1, unterhalb zumindest einem der zwei Längsträger, oberhalb zumindest einem der zwei Längsträger, eine Fahrerkabine, insbesondere deren Rückwand oder Dachspoiler, eine Nutzfahrzeug-Schürze oder ein Stoßfänger des Nutzfahrzeugs 1, etc..

Zu erwähnen ist, dass als Gas vorzugsweise Luft eingesetzt wird und somit das Druckgas zweckmäßig Druckluft entspricht.

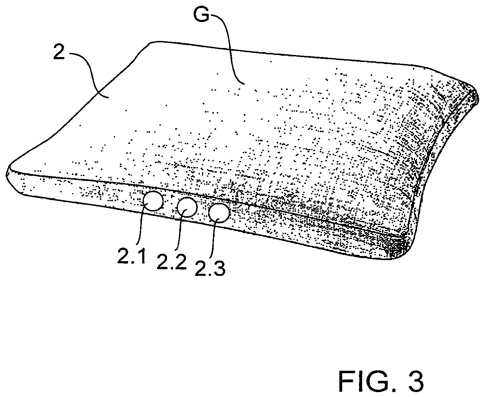

Figur 3 zeigt eine schematische Perspektivansicht eines Druckgasbehälters 2 gemäß einer anderen Ausführungsform der Erfindung. Eine Besonderheit der in Figur 3 gezeigten Ausführungsform ist, dass der Druckgasbehälter 2 nicht schlauch- oder rohrförmig ausgebildet ist, sondern kissenförmig, insbesondere im Wesentlichen rechteck- oder quadratkissenförmig.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Nutzfahrzeug (1), vorzugsweise Omnibus oder Lastkraftwagen, mit einem Druckgassystem, das zumindest einen Druckgasbehälter (2) aufweist, der zur Aufnahme von Druckgas dient, wobei der Druckgasbehälter zumindest einen Befüllanschluss (2.1) zur Druckgas-Zuführung und Entladeanschlüsse zur Druckgas-Entladung (2.2, 2.3) umfasst,
**dadurch gekennzeichnet, dass** der Druckgasbehälter (2) gänzlich aus flexiblem Gewebematerial (G) hergestellt ist und der Druckgasbehälter (2) mit zumindest einem Nebenaggregat des Nutzfahrzeugs (1) verbunden ist, um das Nebenaggregat mit Druckgas zu versorgen.

2. Nutzfahrzeug (1) nach Anspruch 1, **dadurch gekennzeichnet, dass** das Gewebematerial (G) ein Synthetikmaterial ist.

3. Nutzfahrzeug (1) nach einem der vorhergehenden Ansprüche, **dadurch gekennzeichnet, dass** der Druckgasbehälter (2) als Geräuschschürze dient.

4. Nutzfahrzeug (1) nach einem der vorhergehenden Ansprüche, **dadurch gekennzeichnet, dass** der Druckgasbehälter (2) für einen Druck von bis zumindest 7,5 bar, 10 bar, 12,5 bar oder 15 bar ausgelegt ist.

5. Nutzfahrzeug (1) nach einem der vorhergehenden Ansprüche, **dadurch gekennzeichnet, dass** das zumindest eine Nebenaggregat des Nutzfahrzeugs (1) eine Bremsvorrichtung des Nutzfahrzeugs (1) ist.

6. Nutzfahrzeug (1) nach einem der vorhergehenden Ansprüche, **dadurch gekennzeichnet, dass**
- der Druckgasbehälter (2) zumindest zwei, zumindest drei, zumindest vier, zumindest fünf oder zumindest sechs Entladeanschlüsse (2.2, 2.3) zur Druckgas-Entladung aufweist, und/oder
- der Druckgasbehälter (2) mit zumindest zwei, zumindest drei, zumindest vier, zumindest fünf oder zumindest sechs Nebenaggregaten des Nutzfahrzeugs (1) verbunden ist, um sie mit Druckgas zu versorgen.

7. Nutzfahrzeug (1) nach einem der vorhergehenden Ansprüche, **dadurch gekennzeichnet, dass** der Druckgasbehälter (2) mit einem Motorkompressor zur Erzeugung des Druckgases verbunden ist oder mit einem Motor, der zur Druckgaserzeugung genutzt wird.

8. Nutzfahrzeug (1) nach einem der vorhergehenden Ansprüche, **dadurch gekennzeichnet, dass** das Gewebematerial (G) eine schlauch- oder rohrförmige oder rechteck- oder quadratkissenförmige Geometrie erzeugt.

9. Nutzfahrzeug (1) nach einem der vorhergehenden Ansprüche, **dadurch gekennzeichnet, dass** der zumindest eine Befüllanschluss (2.1) und/oder zumindest ein Entladeanschluss (2.2, 2.3) mit einem Gewindering versehen ist, an den ein Adapter für einen Schnellverschluss einer Druckgasleitung anschraubbar ist.

10. Nutzfahrzeug (1) nach einem der vorhergehenden Ansprüche, **dadurch gekennzeichnet, dass** der Druckgasbehälter (2) Druckgas speichert und während eines Stillstands des Nutzfahrzeugs (1) den Überdrück in seinem Innern über eine vordefinierte Zeitdauer aufrecht erhält.

11. Nutzfahrzeug (1) nach einem der vorhergehenden Ansprüche, **dadurch gekennzeichnet, dass** das Volumen der Druckgas-Bevorratung des Druckgasbehälters (2) variabel ist und sich nach dem durchschnittlichen Gasbedarf der zumindest einen angeschlossenen, mit Druckgas zu versorgenden Nutzfahrzeug-Komponente richtet.

12. Nutzfahrzeug (1) nach einem der vorhergehenden Ansprüche, **dadurch gekennzeichnet, dass** das Nutzfahrzeug (1) einen zwei Längsträger umfassenden Fahrzeugrahmen umfasst und zumindest ein Druckgasbehälter (2) zwischen den zwei Längsträgern, unterhalb zumindest einem der zwei Längsträger und/oder oberhalb zumindest einem der zwei Längsträger angeordnet ist.

13. Nutzfahrzeug (1) nach einem der vorhergehenden Ansprüche, **dadurch gekennzeichnet, dass** zumindest ein Druckgasbehälter (2) an einer Fahrerkabine des Nutzfahrzeugs (1), insbesondere deren Rückwand oder Dachspoiler, angeordnet ist.

14. Nutzfahrzeug (1) nach einem der vorhergehenden Ansprüche, **dadurch gekennzeichnet, dass** ein Druckgasbehälter (2) an oder in einer Schürze oder einem Stoßfänger des Nutzfahrzeugs (1) angeordnet ist.

## Claims

1. A utility vehicle (1), preferably a bus or lorry, having a pressurized gas system which has at least one pressurized gas container (2) which serves to receive pressurized gas, wherein the pressurized gas container comprises at least one filling connection (2.1) for feeding in pressurized gas and discharge connections (2.2, 2.3) for discharging pressurized gas, **characterized in that** the pressurized gas container (2) is manufactured entirely from the flexible fabric material (G), and the pressurized gas container (2) is connected to at least one secondary assembly of the utility vehicle (1), in order to supply the secondary assembly with pressurized gas.

2. The utility vehicle (1) according to Claim 1, **characterized in that** the fabric material (G) is a synthetic material.

3. The utility vehicle (1) according to one of the preceding claims, **characterized in that** the pressurized gas container (2) serves as a noise absorption apron.

4. The utility vehicle (1) according to one of the preceding claims, **characterized in that** the pressurized gas container (2) is configured for a pressure of up to at least 7.5 bar, 10 bar, 12.5 bar or 15 bar.

5. The utility vehicle (1) according to one of the preceding claims, **characterized in that** the at least one secondary assembly of the utility vehicle (1) is a brake device of the utility vehicle (1).

6. The utility vehicle (1) according to one of the preceding claims, **characterized in that**
- the pressurized gas container (2) has at least two, at least three, at least four, at least five or at least six discharge connections (2.2, 2.3) for discharging pressurized gas, and/or
- the pressurized gas container (2) is connected to at least two, at least three, at least four, at least five or at least six secondary assemblies of the utility vehicle (1) in order to supply them with pressurized gas.

7. The utility vehicle (1) according to one of the preceding claims, **characterized in that** the pressurized gas container (2) is connected to a motor compressor for generating the pressurized gas or to a motor which is used to generate pressurized gas.

8. The utility vehicle (1) according to one of the preceding claims, **characterized in that** the fabric material (G) produces a hose-shaped or tubular geometry or geometry in the shape of a rectangular or square cushion.

9. The utility vehicle (1) according to one of the preceding claims, **characterized in that** the at least one filling connection (2.1) and/or at least one discharge connection (2.2, 2.3) is provided with a threaded ring to which an adapter for a quick-release closure of a pressurized gas line can be screwed.

10. The utility vehicle (1) according to one of the preceding claims, **characterized in that** the pressurized gas container (2) stores pressurized gas and maintains the excess pressure in its interior over a predefined time period during a stationary state of the utility vehicle (1).

11. The utility vehicle (1) according to one of the preceding claims, **characterized in that** the volume of the pressurized gas supply of the pressurized gas container (2) is variable and is based on the average gas demand of the at least one connected utility vehicle component which is to be supplied with pressurized gas.

12. The utility vehicle (1) according to one of the preceding claims, **characterized in that** the utility vehicle (1) comprises a vehicle frame which comprises two longitudinal beams, and at least one pressurized gas container (2) is arranged between the two longitudinal beams, underneath at least one of the two longitudinal beams and/or above at least one of the two longitudinal beams.

13. The utility vehicle (1) according to one of the preceding claims, **characterized in that** at least one pressurized gas container (2) is arranged on a driver's cab of the utility vehicle (1), in particular on the rear wall or roof spoiler thereof.

14. The utility vehicle (1) according to one of the preceding claims, **characterized in that** a pressurized gas container (2) is arranged on or in an apron or a bumper of the utility vehicle (1).

## Revendications

1. Véhicule utilitaire (1), de préférence un bus ou un camion, comprenant un système de gaz sous pression qui comporte au moins un réservoir de gaz sous pression (2) qui est utilisé pour recevoir du gaz sous pression, le réservoir de gaz sous pression comprenant au moins un raccord de remplissage (2.1) destiné à l'alimentation en gaz sous pression et des raccords de décharge destinés à la décharge de gaz sous pression (2.2, 2.3),
**caractérisé en ce que** le réservoir de gaz comprimé (2) est entièrement réalisé en matière textile souple (G) et le réservoir de gaz comprimé (2) est relié à au moins une unité auxiliaire du véhicule utilitaire (1) pour alimenter l'unité auxiliaire en gaz sous pression.

2. Véhicule utilitaire (1) selon la revendication 1, **caractérisé en ce que** la matière textile (G) est une matière synthétique.

3. Véhicule utilitaire (1) selon l'une des revendications précédentes, **caractérisé en ce que** le réservoir de gaz sous pression (2) sert de tablier antibruit.

4. Véhicule utilitaire (1) selon l'une des revendications précédentes, **caractérisé en ce que** le réservoir de gaz sous pression (2) est conçu pour une pression d'au moins 7,5 bars, 10 bars, 12,5 bars ou 15 bars.

5. Véhicule utilitaire (1) selon l'une des revendications précédentes, **caractérisé en ce que** l'au moins une unité auxiliaire du véhicule utilitaire (1) est un dispositif de freinage du véhicule utilitaire (1).

6. Véhicule utilitaire (1) selon l'une des revendications précédentes, **caractérisé en ce que**
- le réservoir de gaz sous pression (2) comporte au moins deux, au moins trois, au moins quatre, au moins cinq ou au moins six raccords de décharge (2.2, 2.3) destinés à décharger le gaz sous pression, et/ou
- le réservoir de gaz sous pression (2) est relié à au moins deux, au moins trois, au moins quatre, au moins cinq ou au moins six unités auxiliaires du véhicule utilitaire (1) pour les alimenter en gaz sous pression.

7. Véhicule utilitaire (1) selon l'une des revendications précédentes, **caractérisé en ce que** le réservoir de gaz sous pression (2) est relié à un compresseur à moteur pour générer le gaz sous pression ou à un moteur qui est utilisé pour générer du gaz sous pression.

8. Véhicule utilitaire (1) selon l'une des revendications précédentes, **caractérisé en ce que** la matière textile (G) génère une géométrie en forme de tuyau ou de tube ou de coussin carré ou rectangulaire.

9. Véhicule utilitaire (1) selon l'une des revendications précédentes, **caractérisé en ce que** l'au moins un raccord de remplissage (2.1) et/ou au moins un raccord de décharge (2.2, 2.3) sont pourvus d'une bague filetée sur laquelle peut être vissé un adaptateur destiné à une fermeture rapide d'une conduite de gaz sous pression.

10. Véhicule utilitaire (1) selon l'une des revendications précédentes, **caractérisé en ce que** le réservoir de gaz sous pression (2) accumule du gaz sous pression et maintient la surpression dans son intérieur pendant une durée prédéfinie lorsque le véhicule utilitaire (1) est à l'arrêt.

11. Véhicule utilitaire (1) selon l'une des revendications précédentes, **caractérisé en ce que** le volume de l'alimentation en gaz sous pression du réservoir de gaz sous pression (2) est variable et s'adapte au besoin moyen en gaz de l'au moins un composant de véhicule utilitaire raccordé à alimenter en gaz sous pression.

12. Véhicule utilitaire (1) selon l'une des revendications précédentes, **caractérisé en ce que** le véhicule utilitaire (1) comprend un châssis de véhicule comprenant deux longerons, et au moins un réservoir de gaz sous pression (2) est disposé entre les deux longerons, au-dessous d'au moins un des deux longerons et/ou au-dessus d'au moins un des deux longerons.

13. Véhicule utilitaire (1) selon l'une des revendications précédentes, **caractérisé en ce qu'**au moins un réservoir de gaz sous pression (2) est disposé au niveau d'une cabine de conducteur du véhicule utilitaire (1), notamment au niveau de sa paroi arrière ou du déflecteur de toit.

14. Véhicule utilitaire (1) selon l'une des revendications précédentes, **caractérisé en ce qu'**un réservoir de gaz sous pression (2) est disposé sur ou dans un tablier ou un pare-chocs du véhicule utilitaire (1).
